# EUROPÄISCHE PATENTANMELDUNG

(11) **EP 1 065 389 A2**
(43) Veröffentlichungstag der Anmeldung: **03.01.2001**
(21) Anmeldenummer: 00111145.9
(22) Anmeldetag: 24.05.2000
(51) Int. Cl.: F16B 5/02

(54) **Schraubverbindung für faserverstärkte Keramikmaterialien**

(30) Priorität: 29.06.1999 DE 19929874
(71) Anmelder: DORNIER GmbH, 88039 Friedrichshafen (DE)
(72) Erfinder: Trabandt, Ulrich, 88718 Daisendorf (DE)
(74) Vertreter: Landsmann, Ralf, Dipl.-Ing.

(57) **Zusammenfassung**

Schraubverbindung für faserverstärkte Keramik-Materialien zur Verwendung in der Raumfahrt und Luftfahrt für Hochtemperatur-Bereiche bis zu 2000° C.

## Beschreibung

Die Erfindung betrifft eine Schraubverbindung für faserverstärkte Keramik-Materialien zur Verwendung in der Raumfahrt und Luftfahrt für Hochtemperatur-Bereiche bis zu 2000° C. Zum Beispiel:
- Wiedereintritts-Hitzeschilde für Raumfahrzeuge
- Strukturteile für Raumfahrzeuge, die Thermal-Schutzaufgaben übernehmen, wie z.B.:
   - Flügel-Vorderkanten, Nasenkappen, Ruderelemente, Rumpfpaneele
- für Raumfahrt-Antriebs-Systeme, wie z.B.:
   - Einlauframpen, Raketendüsen,
- für Luftfahrt-Überschall-Antriebe für sehr hohe Temperaturbereiche über 1000° C: Brennkammer-Elemente, Düsen- und Stellelemente.

Bei all diesen Beispielen kommen Bauteile zur Anwendung, die mechanisch befestigt oder mit anderen Strukturteilen verbunden werden müssen oder die mechanisch verstellt werden müssen.

Anwendungsbeispiel:
Bei einer Steuerklappe (Höhen- oder Seitenruder) für ein rückkehrfähiges Raumtransport-Gerät treten beim Wiedereintritt in die Erdatmosphäre sehr hohe Temperaturen auf. Gleichzeitig werden aerodynamische Kräfte am Ruder wirksam. Diese Steuer-Kräfte müssen vom Ruder in die Raumfahrzeug-Struktur eingeleitet bzw. übertragen werden. Dies geschieht über Stellhebel. Dabei tritt folgendes Problem auf:
- Das Ruder aus faserverstärkter Keramik wird aufgeheizt (z.B. 1400° C) und erfährt hierdurch eine Materialdehnung.
- Die Oberflächenbeschichtung, die das eigentliche Material der Ruder oder anderer Bauteile vor Oxidation schützt, soll nicht beschädigt werden.
- Die Kraftübertragung vom Ruder in die Steuerflosse mittels Stellhebel erfolgt lokal durch Bolzen- oder Schraubenverbindung, d.h. die Schraube aus metallischem oder keramischem Material verbindet das Ruder und den Stellhebel, hierbei treten durch die verschiedenen Materialen von Ruder und Stellhebel Spannungen auf, die zerstörend auf die Verbindungsstelle wirken können.

Stand der Technik ist US 4,512,699. Diese Schraubverbindung ist aber nicht geeignet, hohe Scherkräfte aufzunehmen, weil der Oberflächenschutz durch die direkte Bolzenverbindung überlastet wird. Dies kann zu einer Beschädigung des notwendigen Oberflächenschutzes führen. Die Montage wird erschwert und eine zerstörungsfreie Demontage ist nicht ausgeschlossen.

Aufgabe der Erfindung ist es, eine Schraubverbindung mit folgenden Eigenschaften zu schaffen:
- Unversehrtheit des Oberflächenschutzes der Faserkeramik
- leicht montierbar
- zerstörungsfreie Demontage, z.B. zur Inspektion
- Aufnahme hoher Scherkräfte
- unterschiedliche thermische Dehnungen von Ruder, Stellelement und Bolzen verursachen keine technischen Probleme.

Diese Aufgabe wird durch den Patentanspruch gelöst.

Die Erfindung wird nachfolgend anhand von zwei Fig. näher erläutert.

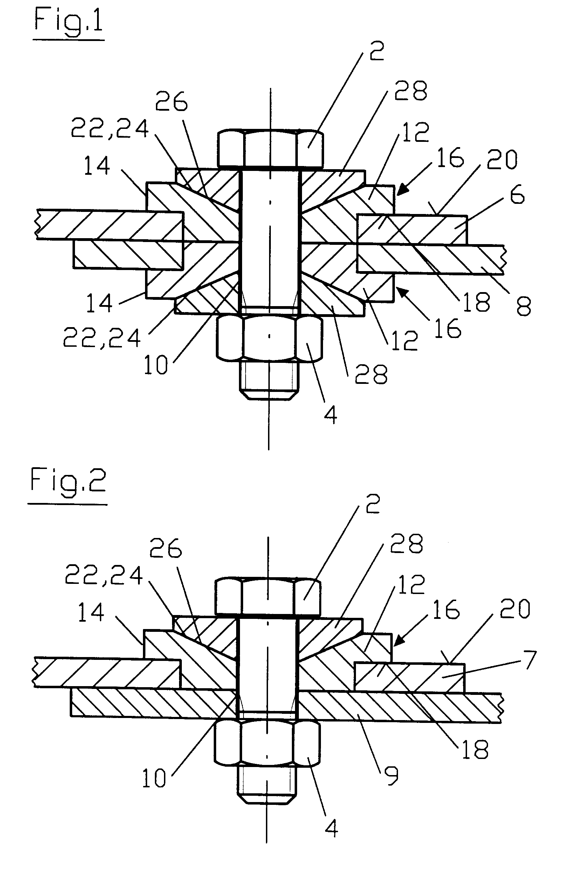

Fig. 1 zeigt eine Schnittdarstellung einer erfindungsgemässen aus einem Bolzen 2 und einer Mutter 4 bestehenden Schraubverbindung für zwei Strukturteile 6, 8, die aus faserverstärktem Keramikmaterial bestehen und eine Bohrung 10 aufweisen. In dieser Bohrung 10 befindet sich eine konzentrische Buchse 12 aus keramischem Material, wobei der Rand 14 der Buchse 12 einen Flansch 16 bildet, dessen eine Seite 18 an der Oberfläche 20 des Strukturteils 6 anliegt und dessen andere Seite 22 einen Innenkonus 24 aufweist, der mit dem Aussenkonus 26 einer weiteren Scheibe 28 korrespondiert, wobei die Scheibe 28 aus einem metallischen Werkstoff besteht.

Die zu verbindenden Strukturteile 6, 8 aus faserverstärkter Keramik werden mit einer Buchse 12 aus Keramik verstärkt. Hierbei wird die Buchse 12 entweder bereits vor Aufbringen des Oxidationsschutzes auf die faserverstärkte Keramik 6, 8 oder nach-träglich eingebracht.

Die Buchse 12 kann auch nachträglich nach Fertigstellung in die Strukturteile eingebracht werden, ohne daß der Oxidationsschutz beeinträchtigt wird, da diesen Schutz im Lochbereich die Buchse 12 und deren Flansch 16 übernimmt.

Die Buchse 12 bewirkt eine mechanische Verstärkung für die Strukturteile bezüglich Lochlaibung und Scherkraft-Übertragung. Der Konus in Buchse 12 und die entsprechende Scheibe 28 übernehmen den Ausgleich unterschiedlicher Dehnungen bei hohen Temperaturen. Die Verbindung kann leicht montiert und demontiert werden ohne die zu verbindenden Bauteile an der Oberfläche zu beschädigen.

Fig. 2 zeigt eine Schnittdarstellung einer erfindungsgemässen aus einem Bolzen 2 und einer Mutter 4 bestehenden Schraubverbindung für zwei Strukturteile, die aus faserverstärktem Karamikmaterial 7 und einem metallischen Strukturteil 9 bestehen und eine Bohrung 10 aufweisen. Das zu verbindende Strukturbauteil aus faserverstärktem Keramikmaterial 7 wird mit einer Buchse 12 aus Keramik verstärkt, die sonstigen Funktionen und Bauteile sind wie bei Fig. 1.

Durch Fig. 2 wird verdeutlicht, dass die erfindungsgemässe Schraubenverbindung nicht nur für die Verbunde zwischen faserverstärktem Keramikmaterial eingesetzt werden kann, sondern auch für Verbunde, die aus Metall/faserverstärktem Keramikmaterial bestehen, geeignet ist.

### Bezugszeichenliste

- 2: Schraube
- 4: Mutter
- 6, 8: Strukturteile aus faserverstärkter Keramik
- 7: Strukturteil aus faserverstärkter Keramik
- 9: Strukturteil aus Metall
- 10: Bohrung
- 12: Buchse aus monolythischer Keramik
- 14: Rand der Buchse
- 16: Flansch
- 18: eine Seite der Scheibe
- 20: Oberfläche Strukturteil
- 22: andere Seite der Scheibe
- 24: Innenkonus
- 26: Aussenkonus
- 28: Scheibe aus metallischem Werkstoff

## Patentansprüche

1. Schraubverbindung für zwei oder mehr Strukturteile, bestehend aus einem Bolzen und einer Mutter und einer konzentrischen Buchse, die die Bohrung in mindestens einem Strukturteil verstärkt, **dadurch gekennzeichnet**, dass die Buchse (12) aus Keramik besteht, dass der Rand (14) der Buchse (12) einen Flansch (16) bildet, dessen eine Seite (18) an der Oberfläche (20) des einen Strukturteils (6, 7) anliegt und dessen andere Seite (22) einen Innenkonus (24) aufweist, der mit dem Aussenkonus (26) einer weiteren Scheibe (28) aus einem metallischen Werkstoff korrespondiert.
